# EUROPÄISCHE PATENTSCHRIFT

(11) **EP 4 544 795 B1**
(45) Veröffentlichungstag und Bekanntmachung des Hinweises auf die Patenterteilung: **18.02.2026**
(21) Anmeldenummer: 23772437.2
(22) Anmeldetag: 13.09.2023
(51) Int. Cl.: H04W 4/40

(54) **ERZEUGEN EINES INDIKATORS FÜR DAS ANGEBEN EINER GÜTE EINER DATENÜBERTRAGUNG**
PRODUCING AN INDICATOR FOR SPECIFYING THE QUALITY OF A DATA TRANSMISSION
PRODUCTION D'UN INDICATEUR POUR SPÉCIFIER LA QUALITÉ D'UNE TRANSMISSION DE DONNÉES

(30) Priorität: 22.09.2022 DE 102022124382
(43) Veröffentlichungstag der Anmeldung: 30.04.2025
(73) Patentinhaber: AUDI AG, 85057 Ingolstadt (DE)
(72) Erfinder: BASKAKOW, Kerstin, 85132 Sappenfeld (DE); RÖTTINGER, Christian, 85049 Ingolstadt (DE)
(74) Vertreter: Hofstetter, Schurack & Partner
(86) Internationale Anmeldenummer: PCT/EP2023/075196
(87) Internationale Veröffentlichungsnummer: WO 2024/061707

(56) Entgegenhaltungen:
- WO-A1-2010/112327
- DE-A1- 102014 209 199
- US-A1- 2020 041 994
- US-B2- 7 994 905
- US-B2- 8 724 493

## Beschreibung

Die Erfindung betrifft ein Verfahren zum Erzeugen eines Indikators für das Angeben einer Güte einer kabellosen Datenübertragung zwischen einem Sendegerät und einem damit gekoppelten Empfangsgerät. Des Weiteren betrifft die Erfindung auch eine Datenverarbeitungsvorrichtung zum Durchführen eines entsprechenden Verfahrens. Die Erfindung betrifft auch ein Empfangsgerät und ein Sendegerät mit einer solchen Datenverarbeitungsvorrichtung. Schließlich betrifft die Erfindung auch ein System mit einem solchen Sendegerät und einem solchen Empfangsgerät.

In einem elektrischen Netzwerk, wie es zum Beispiel von einem Bordnetz eines Kraftfahrzeugs bekannt ist, kann zur Kommunikation von einzelnen Teilnehmern des Netzwerks zum Beispiel ein sogenanntes BUS-System eingesetzt werden. Heutzutage kommen verschiedene Typen oder Arten von BUS-Systemen zum Einsatz. Diese unterscheiden sich zum Beispiel in einer Verschaltung der Teilnehmer und zum Beispiel einem jeweils verwendeten, standardisierten Kommunikationsprotokoll zur Datenübertragung. Im Fahrzeugbereich sind als BUS-Typen unter anderem der CAN-BUS (Controller Area Network), der LIN-BUS (LIN: Local Interconnect Network), Ethernet oder Flexray bekannt, um hier nur einige Beispiele zu nennen.

So können zum Beispiel Signale oder Daten zwischen zwei Teilnehmern, wie etwa Steuereinheiten des Kraftfahrzeugs, über einen gemeinsamen Übertragungsweg ausgetauscht werden. Die Übertragung kann BUStypabhängig insbesondere unidirektional oder bidirektional erfolgen. Die Daten umfassen zum Beispiel eine oder mehrere Botschaften, die einen Zustand oder eine Eigenschaft des jeweiligen Teilnehmers beschreiben oder angeben. So kann zum Beispiel ein Türsteuergerät eines Fahrzeugs die Botschaft "Tür auf" oder "Tür zu" als Zustand an einen zentralen Bordcomputer des Fahrzeugs übertragen. Entsprechend kann zum Beispiel der zentrale Bordcomputer ein Soll-Drehmoment als Botschaft an eine Antriebsstrangsteuereinheit des Kraftfahrzeugs übertragen.

Vorzugsweise erfolgt die Datenübertragung getaktet oder periodisch in Form eines Botschaftssignals. Dabei werden mehrere Botschaften aufeinanderfolgend oder aneinander gereiht zeitlich nacheinander gesendet. Das Übertragen erfolgt mit einer vorbestimmten Periodizität, also in vorbestimmten Zeitintervallen. Die Periodizität kann abhängig vom jeweiligen Teilnehmer sein, insbesondere dessen Stellung für die Sicherheitsrelevanz im Netzwerk. Falls mehrere Teilnehmer beispielsweise über eine gemeinsame Datenleitung miteinander verbunden sind, kann so sichergestellt werden, dass keine zwei Botschaften von verschiedenen Teilnehmer gleichzeitig übertragen werden. Die Periodizität oder Zykluszeit liegt typischerweise zum Beispiel im Bereich von wenigen Millisekunden bis einigen Sekunden liegen. Insbesondere kann die Periodizität zum Beispiel zwischen 20 Millisekunden und 1.000 Millisekunden liegen.

In der internen Kommunikation in einem solchen Netzwerk, kann es zu Übertragungsfehlern kommen. So können einzelne Botschaften zum Beispiel aufgrund von Netzwerkstörungen verloren gehen.

Um in einer Datenübertragung Fehler zu erkennen, ist aus der WO 2008/017441 A1 ist zum Beispiel eine zentrale Steuereinheit zur redundanten Kommunikation bekannt. Dabei ist die zentrale Steuereinheit über zwei Kommunikationswege mit einer Antriebssteuereinheit verbunden. Über diese wird das Sollmoment unter Zuordnung des gleichen Botschaftszählers und einer jeweiligen Prüfsumme zugeordnet. Anhand der Übereinstimmung des Botschaftszählers und der Gleichzeit der Prüfsumme kann die korrekte Übertragung des Sollmoments geprüft werden.

Nachteilig hierbei ist, dass zusätzliches Material und Bauraum für den redundanten Kommunikationsweg bereitzustellen ist. Das kann die Herstellungs- und Entwicklungskosten erhöhen.

Die WO 2010/ 112 327 A1 offenbart eine Möglichkeit bei der Fahrzeug-zu-Fahrzeug Kommunikation ein hohes Maß an Datensicherheit bereitzustellen. Dabei wird überprüft, ob empfangene Botschaften, die zwischen den Fahrzeugen ausgetauscht wird, bestimmten Regeln entsprechen. Dazu kann zum Beispiel überprüft werden, ob die Anzahl der empfangenen Datenpakete pro Zeiteinheit regelkonform ist.

Neben der internen Kommunikation wird zum Beispiel in modernen Fahrzeugen auch die externe Kommunikation genutzt. Zum Beispiel kann es vorkommen, dass bestimmte Daten zur Verarbeitung an ein Backend, also zum Beispiel einen fahrzeugexternen Server, ausgeleitet oder weitergeleitet werden sollen. Dazu wird im Fahrzeug zum Beispiel ein sogenannter ODC (Online Data Collector - Online Datensammler) eingesetzt. Dieser kann zum Beispiel die Botschaftssignale der Steuereinheiten sammeln und zum Beispiel zur Weiterleitung an das Backend vorbereiten.

Der ODC kann aber bezüglich seiner Ressourcen und Leistungsfähigkeit limitiert sein, sodass nur eine von beispielsweise zu Softwareversion zu Softwareversion unterschiedliche Menge an Daten sicher ausgeleitet werden kann. Des Weiteren kann die Fähigkeit des ODC zum Zwischenspeichern von Daten, falls zum Beispiel gerade keine kabellose Kommunikationsverbindung, wie zum Beispiel Mobilfunkverbindung, zu dem Backend besteht, begrenzt sein.

Es kann passieren, dass eine Grenzlast des Systems "ODC", im Fahrzeug vorab nicht sicher bestimmt werden kann. Das kann zum Beispiel vorkommen, wenn es eine hohe Anzahl an Softwareversionen (zum Beispiel zu jedem Fahrzeugmodell eine neue Softwareversion) sowie eine hohe Anzahl an Varianten der Softwareversion für die einzelnen Fahrzeugmodelle gibt. Auch kann es Auslastungsgrenzen in der Kommunikationsverbindung zum Backend oder im Backend selbst geben. Dadurch kann es passieren, dass die Datenausleitung oder Datenübertragung zumindest teilweise nicht stabil funktionieren kann oder die Datenqualität für die Weiterverarbeitung nicht ausreichend gewährleistet werden kann.

Es ist die Aufgabe der vorliegenden Erfindung, einen Indikator zum zuverlässigen und kostengünstigen Angeben einer Güte einer kabellosen Datenübertragung zwischen einem Sendegerät und einem damit gekoppelten Empfangsgerät bereitzustellen, durch den die Qualität einer Datenübertragung über eine jeweilige Datenstrecke geprüft werden kann.

Die Aufgabe wird gelöst durch die Gegenstände der unabhängigen Patentansprüche. Vorteilhafte Weiterbildungen der Erfindung sind durch die abhängigen Patentansprüche, die Beschreibung sowie die Figuren offenbart.

Die Erfindung basiert auf der Erkenntnis, dass durch die geschickte Ausnutzung der Periodizität von bereits vorhandenen Signalen, wie zum Beispiel dem vorgenannten Botschaftssignal, in einem Sendegerät, wie zum Beispiel dem vorgenannten Fahrzeug, ein entsprechender Indikator besonders einfach generiert werden kann. Durch diesen kann die Auslastung der Datenstrecke erkannt werden und zum Beispiel eine Verarbeitung der übertragenen Daten angepasst werden.

Hierzu schlägt die Erfindung gemäß einem Aspekt ein Verfahren zum Erzeugen eines Indikators für das Angeben einer Güte, also zum Beispiel einer Qualität oder Integrität, einer kabellosen Datenübertragung zwischen einem Sendegerät und einem damit, insbesondere kabellos, gekoppelten Empfangsgerät vor. So wird erfindungsgemäß die Übertragungsqualität von einem Kraftfahrzeug als Sendegerät und einem Backend als Empfangsgerät festgestellt. Das Verfahren umfasst die folgenden Schritte, die zum Beispiel mittels einer Datenverarbeitungsvorrichtung ausgeführt werden können:
Zuerst wird ein Verarbeitungssignal erfasst, welches zur Verarbeitung durch das Empfangsgerät von dem Sendegerät an das Empfangsgerät übertragbar ist, also zum Beispiel übertragen wurde oder übertragen werden soll. Das Verarbeiten kann vorliegend zum Beispiel ein Auswerten, Aufbereiten und/oder Zwischenspeichern bedeuteten. Dieses Verarbeitungssignal ist dabei mittels einer Datensammeleinheit, wie zum Beispiel einem eingangs genannten Online Data Collector (ODC) des Sendegeräts bereitstellbar. Das heißt, die Datensammeleinheit kann das Verarbeitungssignal erzeugen und übermitteln. Zum Bereitstellen des Verarbeitungssignals kann die Datensammeleinheit dabei zum Beispiel einen jeweiligen Botschafts-Datensatz zumindest einer Funktionseinheit des Sendegeräts erfassen. Das heißt, die Datensammeleinheit ist dazu ausgebildet oder eingerichtet.

Der jeweilige Botschafts-Datensatz umfasst zumindest eine Botschaft, die insbesondere einen zeitabhängig aktuellen Zustand, also zum Beispiel eine Eigenschaft, der jeweiligen Funktionseinheit angibt, also beschreibt oder codiert. Der Botschafts-Datensatz kann somit zum Beispiel ein Teil oder Ausschnitt des Botschaftssignals sein, das in dem Sendegerät zur Kommunikation zweier Funktionseinheiten verwendet wird. Im Fahrzeugbereich zum Beispiel können die Funktionseinheiten zum Beispiel jeweilige Steuereinheiten, wie etwa eine zentrale Recheneinheit und ein Antriebssteuereinheit oder ein Türsteuereinheit sein. Erfindungsgemäß umfasst der Botschafts-Datensatz ein Datenpaket mit wenigstens zwei periodisch aufeinanderfolgenden oder zeitlich aneinander gereihten Botschaften. Vorzugsweise können auch zugeordnete Botschaftsinformationen, wie zum Beispiel eine Uhrzeit und/oder weitere relevante Metainformationen zu der Botschaft umfasst sein.

Bei der jeweiligen Botschaft handelt es sich somit um Daten, die mittels des Verarbeitungssignals kabellos vom Sendegerät an das Empfangsgerät übertragen werden sollen. Dabei kann es bei der Übertragung unter bestimmten Bedingungen zum vollständigen oder teilweisen Verlust einzelner Botschaften oder eines Botschafts-Datensatzes kommen. Das kann zum Beispiel passieren, wenn eine Kommunikationsverbindung zu der Datensammeleinheit oder zwischen Sendegerät und Empfangsgerät abbricht, oder die Datensammeleinheit beziehungsweise das Sende- oder Empfangsgerät eine maximale Rechenleistung, also ihre jeweilige Auslastungsgrenze, erreicht oder überschritten haben.

Um eine solche Funktionsstörung in der Datenübertragung zu erkennen, ist in dem Verfahren vorgesehen, dass ein aktueller Empfangsgeräte-Botschaftszählwert in Abhängigkeit von einer Anzahl der an das Empfangsgerät übertragenen Botschaften des jeweiligen Botschafts-Datensatzes bestimmt wird. Es geht also darum zu ermitteln, wie viele Botschaften mittels eines jeweiligen Verarbeitungssignals bereits übertragen wurden oder zum Übertragen bereitgestellt wurden. Das heißt, der Empfangsgeräte-Botschaftszählwert kann neben den aktuellen Botschaften im aktuellen Verarbeitungssignal, auch die Botschaften aus vorangegangenen Übertragungen umfassen oder mitzählen, wenn beispielsweise schon mehrere Übertragungen stattgefunden haben. Der Empfangsgeräte-Botschaftszählwert gibt somit eine Gesamtbotschaftsanzahl an, die innerhalb eines vorbestimmten Datenübertragungszeitraums zwischen Sende- und Empfangsgerät zum Austauschen geplant oder ausgetauscht wurden. Der Datenübertragungszeitraum kann zum Beispiel durch ein Startsignal und ein jeweiliges Endsignal, das vom Sendegerät bereitgestellt wird, eingegrenzt sein. Diese können zum Beispiel einem Start oder einer Aktivierung des Sendegeräts beziehungsweise dessen Deaktivierung zugeordnet sein.

Danach wird in dem Verfahren überprüft, ob der Empfangsgeräte-Botschaftszählwert mit einem vorgegebenen Vergleichs-Botschaftszählwert gemäß einem vorgegebenen Überprüfungskriterium übereinstimmt. Der Vergleichs-Botschaftszählwert ergibt sich dabei in Abhängigkeit von einer vorbekannten Periodizität oder Wiederholungsrate von jeweils aufeinanderfolgenden Botschaften, die von der zugeordneten Funktionseinheit zum Beispiel mittels des Botschaftssignals im Sendegerät periodisch, also in vorbestimmten Zeitintervallen, bereitgestellt, insbesondere gesendet oder übertragen, werden. Wie eingangs beschrieben, tritt diese Art der periodischen Botschaftsübertragung insbesondre bei Funktionseinheiten auf, die mittels einem BUS-Systems gekoppelt sind.

In dem Verfahren wird dann in Abhängigkeit von dem Ergebnis der Überprüfung der Indikator bereitgestellt, der die Güte der Datenübertragung des Verarbeitungssignals angibt. Der Indikator gibt somit einen Hinweis darauf, ob eine bereits erfolgte oder eine noch ausstehende oder geplante Datenübertragung zwischen Sende- und Empfangsgerät korrekt funktionieren kann. Welcher Teil der Übertragungsstrecke durch das beschriebene Verfahren geprüft werden kann, hängt davon ab, ob zum Beispiel das Sendegerät oder das Empfangsgerät das obige Verfahren durchführt. Darauf wird später noch näher eingegangen.

Das beschriebene Verfahren kann dabei sowohl in der Erprobung oder im Testing als auch im Feld, also den vom Endverbraucher benutzten Sende- und Empfangsgeräten, eingesetzt werden. Insgesamt kann dadurch kontinuierlich die Qualität der Datensammlung oder Datenübertragung überwacht oder gemonitort werden. Durch den Indikator kann zudem sichergestellt sein, dass das jeweilige System, also zum Beispiel Empfangs- oder Sendegerät oder die Datensammeleinheit, nicht über die jeweilige Leistungsgrenze hinaus betrieben oder belastet wird. Somit kann zum Beispiel vermieden werden, dass bestimmte Dienste, wie zum Beispiel Connect-Dienste, beeinträchtigt werden. Außerdem kann mittels des Indikators zum Beispiel noch granularer entschieden werden, welche Daten für die Weiterverarbeitung noch verwendbar sind und welche Daten zum Beispiel Datenmüll sind oder zum Beispiel zu fehlerhaften Schlussfolgerungen in der Verarbeitung führen können.

Das beschriebene Verfahren kann zum Beispiel als Programmcode in eine bereits vorhandene Datenverarbeitungsvorrichtung des Sendegeräts beziehungsweise des Empfangsgeräts implementiert werden. Hierdurch ergibt sich der Vorteil, dass jedes beliebige Sende- oder Empfangsgerät mit der entsprechenden Funktion nachgerüstet werden kann, sodass zum Beispiel unabhängig von einer Softwareversion der Datensammeleinheit die Datenübertragung auf inhaltliche Übereinstimmung oder Konsistenz geprüft werden kann.

Anders ausgedrückt, können für jede Funktionseinheit oder für jedes Botschaftssignal des Sendegeräts die Periodizität oder Zykluszeit bekannt sein. Dadurch kann sozusagen mitgezählt werden, wie viele Botschaften pro übertragenem oder zu übertragenden Datensatz enthalten oder vorhanden sein müssten. Somit kann durch das Verfahren überprüft werden, ob ein von dem Sendegerät beziehungsweise dessen Funktionseinheit bereitgestellter Botschafts-Datensatz mit einem von dem Empfangsgerät empfangenen oder an dieses zu übertragenden Botschafts-Datensatz übereinstimmt oder nicht, indem die vorgenannten Botschaftszählwerte verglichen werden. Falls Botschaften oder Teile der Datensätze bei der Übertragung oder Vorbereitung der Übertragung verloren gegangen sind, kann dies durch den Indikator angezeigt werden.

Dazu wird die Periodizität der Datenübertragung im Sendegerät ausgenutzt. Mit der Periodizität ist eine Regelmäßigkeit der jeweils aufeinanderfolgenden Botschaften, die in einem Botschaftssignal übertragen oder erwartet werden, gemeint. Diese Art der periodischen Botschaftsübertragung ist typisch für die eingangs beschriebene BUS-Kommunikation. Das heißt, die Botschaften werden im Sendegerät in Form von BUS-Signalen, also mittels eines BUS-Systems, übertragen. Zum Beispiel kann die Übertragung mittels eines CAN- oder eines LIN-BUS oder Ethernet oder Flexray erfolgen.

Die Periodizität kann anhand Botschaftszählwerte vergleichbar gemacht werden. Bei dem jeweiligen Botschaftszählwert handelt es sich dabei um einen numerischen Wert, der mit jeder Botschaft zum Beispiel um genau 1 hochgezählt wird. Der Botschaftszählwert kann somit ein Prüfwert oder zum Beispiel eine Prüfsumme sein, mittels welcher die korrekte Datenübertragung validiert werden kann.

Der jeweilige Botschaftszählwert kann zum Beispiel nach einem vorbestimmten Zählschema codiert sein. So kann vermieden werden, dass bei üblichen Botschaftsübertragungsraten von wenigen Millisekunden bis hin zu wenigen Mikrosekunden, wie sie beispielsweise in einem BUS-System üblich sind, unendlich hohe Botschaftszählwerte erreicht werden. Zum Beispiel kann der jeweilige Botschaftszählwert auf einen Maximalwert begrenzt sein und bei Erreichen des Maximalwerts wieder auf einen Startwert zurückgesetzt werden. Zum Beispiel kann so der Zähler für jede Botschaft periodisch zwischen 0 und 15 oder 0 und 255 hochgezählt werden, wobei der Zähler für jede Botschaft um jeweils 1 erhöht wird. Ist der Maximalwert 15 oder 255 erreicht, wird der Zähler zurückgesetzt auf den Startwert 0.

Das Ergebnis des Botschaftszählwertevergleichs kann der vorgenannte Indikator sein, also ein Kennwert, der die Konsistenz oder Vollständigkeit der übertragenen Daten angibt. Der Indikator kann zum Beispiel negativ oder positiv klassifiziert oder kategorisiert sein. Ein positiver Indikator kann zum Beispiel die korrekte oder fehlerfreie Datenübertragung bedeuten. Ein negativer Indikator kann hingegen zum Beispiel eine fehlerbehaftete oder inkorrekte Datenübertragung bedeuten. Insbesondere kann zum Beispiel nur dann, wenn die Überprüfung positiv ist, also die Botschaftszählwerte übereinstimmen, ein positiver Indikator ausgegeben werden. Im Vergleich dazu kann zum Beispiel nur dann, wenn die Überprüfung negativ ist, also die Botschaftszählwerte voneinander abweichen, ein negativer Indikator, der die fehlerbehaftete Datenübertragung symbolisiert, bereitgestellt werden.

Der erzeugte Indikator kann zum Beispiel verwendet werden, um eine Fehlermeldung oder einen Fehlerhinweis auszulösen, insbesondere dann wenn ein negativer Indikator bereitgestellt wird. Auf Basis der Fehlermeldung können zum Beispiel diejenigen Botschaften, die von der fehlerbehafteten Datenübertragung umfasst waren, noch einmal übertragen werden. Alternativ können diese Daten zum Beispiel als fehlerbehaftet gekennzeichnet werden. Zusätzlich oder alternativ können diese Daten zum Beispiel auch gelöscht oder verworfen werden.

Zu der Erfindung gehören auch Ausführungsformen durch die sich zusätzliche Beispiel ergeben.

Gemäß einer Ausführungsform wird mittels des Sendegeräts der Vergleichs-Botschaftszählwert bestimmt. Dabei ist der Vergleichs-Botschaftszählwert von dem Verarbeitungssignal zum Übertragen an das Empfangsgerät umfasst. Das heißt, der Vergleichs-Botschaftszählwert wird als Teil des Verarbeitungssignals an das Empfangsgerät übertragen.

Gemäß einer weiteren Ausführungsform wird der Vergleichs-Botschaftszählwert mittels des Empfangsgeräts bestimmt. Das Bestimmen erfolgt dabei in Abhängigkeit von einem vorbekannten Startzeitpunkt eines Beginns einer Botschaftsübertragung mittels der zugeordneten Funktionseinheit im Sendegerät und einer vorbekannten Paketgröße, die die Anzahl der übermittelten Botschaften in dem Verarbeitungssignal angibt. Mit dem Beginn der Botschaftsübertragung ist vorliegend insbesondere der Beginn des vorgenannten Datenübertragungszeitraums gemeint. Zusätzlich oder alternativ kann zum Beispiel auch ein Zeitpunkt in dem Datenübertragungszeitraum gemeint sein, zu dem die erste Botschaft von der jeweiligen Funktionseinheit bereitgestellt wird. Mit der Paketgröße ist vorliegend insbesondere die Größe oder der Umfang des jeweiligen Botschafts-Datensatzes gemeint. Die Paketgröße gibt somit die Anzahl der im Botschafts-Datensatze höchstes enthaltenen Botschaften vor. Die Paketgröße kann zum Beispiel als Standardgröße festgelegt oder vorgegeben sein. Der Startzeitpunkt und die Paketgröße können zum Beispiel von dem Sendegerät in dem Verarbeitungssignal an das Empfangsgerät übermittelt werden.

Die beiden zuvor beschriebenen Ausführungsformen sind insbesondere dann relevant, wenn das Verfahren mittels des Empfangsgeräts durchgeführt werden soll. So kann eine besonders einfache Möglichkeit zum Erkennen des Vergleichs-Botschaftszählwerts für das Empfangsgerät umgesetzt sein.

Gemäß einer weiteren Ausführungsform wird der jeweilige Botschaftszählwert, also insbesondere der Empfangsgeräte-Botschaftszählwert und/oder der Vergleichs-Botschaftszählwert, als eine Summe aus einer vorbestimmten Anzahl an Botschaften gebildet. Der Botschaftszählwert kann somit als Prüfsumme der Botschaften genutzt werden.

Gemäß einer weiteren Ausführungsform wird der jeweilige Botschaftszählwert als ein Mittelwert einer Summe aus einer vorbestimmten Anzahl an Botschaften gebildet. Das heißt, die jeweiligen Botschaftszählwerte werden zum Beispiel für eine bestimmte Periodendauer oder ein bestimmtes Zeitintervall betrachtet. Die Anzahl der betrachteten Botschaften kann zum Beispiel in Abhängigkeit von dem vorgenannten Zählschema gewählt werden. Zum Beispiel kann die Summe über ein Fenster oder einen Bereich von jeweils 16 oder 256 aufeinanderfolgenden Botschaften gebildet werden. Aufgrund der periodischen Abfolge des Botschaftszählers ist es dabei egal, wo und wann gestartet wird, solange über den Bereich oder die gewählte Periodendauer aufsummiert beziehungsweise der Mittelwert gebildet wird. Bei Werten von 0 bis 15 für den Botschaftszähler muss die Summe somit 120 betragen beziehungsweise der Mittelwert 7,5, falls keine Botschaften bei der Erfassung oder Verarbeitung verloren gegangen sind.

Alternativ hierzu kann natürlich vorgesehen sein, dass jeweils aktuelle Werte der jeweiligen Botschaftszählwerte miteinander verglichen werden. Das heißt, es kann überprüft werden, ob der Botschaftszählwert, der vorlag, als das Vergleichssignal zum Übertragen vorbereitet oder übertragen wurde, mit dem Botschaftszählwert übereinstimmt, der empfangen wurde oder zum Aussenden vorbereitet wurde.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Die Erfindung betrifft gemäß einem weiteren Aspekt auch eine Datenverarbeitungsvorrichtung zum Erzeugen eines Indikators für das Angeben einer Güte einer kabellosen Datenübertragung zwischen dem Sendegerät und dem zugeordneten Empfangsgerät. Dabei ist die Datenverarbeitungsvorrichtung ausgebildet, ein Verfahren, wie es zuvor beschrieben wurde, durchzuführen oder auszuführen.

Die Datenverarbeitungsvorrichtung kann zum Beispiel eine Steuereinrichtung oder eine Prozessoreinrichtung aufweisen, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein. Eine Prozessorschaltung der Prozessoreinrichtung kann z.B. zumindest eine Schaltungsplatine und/oder zumindest ein SoC (System on Chip) aufweisen.

Die Erfindung betrifft gemäß einem weiteren Aspekt auch ein Empfangsgerät mit einer Datenverarbeitungsvorrichtung, wie sie zuvor beschrieben wurde. Die Datenverarbeitungsvorrichtung ist dabei ausgebildet, das Verarbeitungssignal mittels der kabellosen Datenübertragung von dem Sendegerät zu empfangen. Somit kann sowohl eine Datenstrecke oder Datenübertragung im Sender, als auch auf einem Übertragungsweg zwischen Sendegerät und Empfangsgerät geprüft werden.

Das Empfangsgerät kann vorliegend zum Beispiel eine fahrzeugexterne Datenspeichervorrichtung sein. Es kann sich zum Beispiel um ein sogenanntes Backend oder einen sogenannten Server, insbesondere einen Cloud-Server handeln.

Gemäß einem weiteren Aspekt betrifft die Erfindung auch ein Sendegerät mit zumindest einer Funktionseinheit und einer Datenverarbeitungsvorrichtung, wie sie zuvor beschrieben wurde. Die Datenverarbeitungsvorrichtung kann eine Datensammeleinheit zum Bereitstellen des Verarbeitungssignals umfassen oder dieser zumindest zugeordnet sein. Die Datensammeleinheit ist ausgebildet, zum Bereitstellen des Verarbeitungssignals einen jeweiligen Botschafts-Datensatz der jeweiligen Funktionseinheit zu erfassen. Das Sendegerät ist zudem ausgebildet, das Verarbeitungssignal mittels kabelloser Datenübertragung an das Empfangsgerät zu übertragen. Hierdurch kann somit die Datenstrecke oder Datenübertragung im Sender vor dem Aussenden des Verarbeitungssignals an das Empfangsgerät geprüft werden.

Das Sendegerät ist bevorzugt als Kraftfahrzeug oder Kraftwagen ausgebildet. Es kann sich insbesondere um einen Personenkraftwagen oder Lastkraftwagen oder einen Personenbus oder ein Motorrad handeln.

Die Funktionseinheit des Sendegeräts kann zum Beispiel eine Steuereinheit sein. Das Sendegerät kann eine Vielzahl von Funktionseinheiten umfassen. Im System Kraftfahrzeug kann die Funktionseinheit zum Beispiel eine Türsteuereinheit oder Motorsteuereinheit oder eine Antriebssteuereinheit oder eine zentrale Recheneinheit oder eine andere herkömmliche Steuereinheit, wie sie im Fahrzeugbereich eingesetzt wird, sein. Die Funktionseinheiten des Sendegeräts können sich von der Datensammeleinheit oder der Datenverarbeitungsvorrichtung zum Beispiel dadurch unterscheiden, dass die Funktionseinheiten nur für die senderinterne Kommunikation oder Datenübertragung ausgebildet sind. Im Gegensatz dazu können die Datensammeleinheit beziehungsweise die Datenverarbeitungsvorrichtung zur Datenübertragung nach fahrzeugextern ausgebildet sein.

Besonders bevorzugt handelt es sich bei den Funktionseinheiten zum Beispiel nur um sicherheitsrelevante Steuereinheiten. Damit sind Steuereinheiten gemeint, die zum Beispiel für eine funktionale Sicherheit des Sendegeräts zuständig sind. In einem Kraftfahrzeug kann es sich zum Beispiel um Steuereinheiten handeln, die eine Lenkung oder Bremsung betreffen oder durch die eine sonstige für eine Verkehrszulassung notwendige Funktion umgesetzt wird. Von den sicherheitsrelevanten Steuereinheiten sind nicht sicherheitsrelevante Funktionseinheiten, also zum Beispiel Komfortverbraucher im Fahrzeug, zu unterscheiden.

Gemäß einem weiteren Aspekt betrifft die Erfindung auch ein System mit einem Sendegerät und einem Empfangsgerät, welche in einer kabellosen Kommunikationsverbindung zur Datenübertragung miteinander gekoppelt sind. Dabei ist das Empfangsgerät als Empfangsgerät, wie es zuvor beschrieben wurde, ausgebildet. Zusätzlich oder alternativ ist auch das Sendegerät als Sendegerät, wie es zuvor beschrieben wurde, ausgebildet.

Das heißt, entweder das Sendegerät und das Empfangsgerät oder nur das Sendegerät beziehungsweise nur das Empfangsgerät können die vorgenannte Datenverarbeitungsvorrichtung umfassen. Das vorgenannte Verfahren zum Erzeugen des Indikators kann somit entweder unter Verwendung eines der beiden Geräte (Sende- und Empfangsgerät), oder unter Verwendung beider Geräte durchgeführt werden.

Das Verarbeitungssignal kann somit als Drahtlossignal, Funksignal oder kabelloses Signal bereitgestellt werden. Um die kabellose Datenübertragung zu realisieren, können das Sende- und Empfangsgerät mittels einer drahtlosen Kommunikationsschnittstelle verbunden oder gekoppelt sein. Dabei können das Sendegerät und das Empfangsgerät jeweils eine korrespondierende Kommunikationseinheit aufweisen. Mittels dieser können das Sende- und das Empfangsgerät in der kabellosen Kommunikationsverbindung miteinander verbunden werden. Zum Beispiel kann es sich bei der Kommunikationsverbindung um eine Verbindung mittels WLAN, Bluetooth, Funk, insbesondere Mobilfunk, handeln. Die jeweilige Kommunikationseinheit kann somit zum Beispiel ein Antennenmodul oder Funkmodul sein.

Zu der Erfindung gehören auch Weiterbildungen der Datenverarbeitungsvorrichtung, des Empfangsgeräts, des Sendegeräts und des Systems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der Datenverarbeitungsvorrichtung, des Empfangsgeräts, des Sendegeräts und des Systems hier nicht noch einmal beschrieben.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: eine schematische Darstellung eines Systems, in dem mittels einer Datenverarbeitungsvorrichtung eine Güte einer Datenübertragung zwischen einem Sendegerät und einem Empfangsgerät bestimmt werden kann; und
- Fig. 2: eine schematische Darstellung eines Verfahrensablaufdiagramms zum Betreiben zum Betreiben der Datenverarbeitungsvorrichtung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

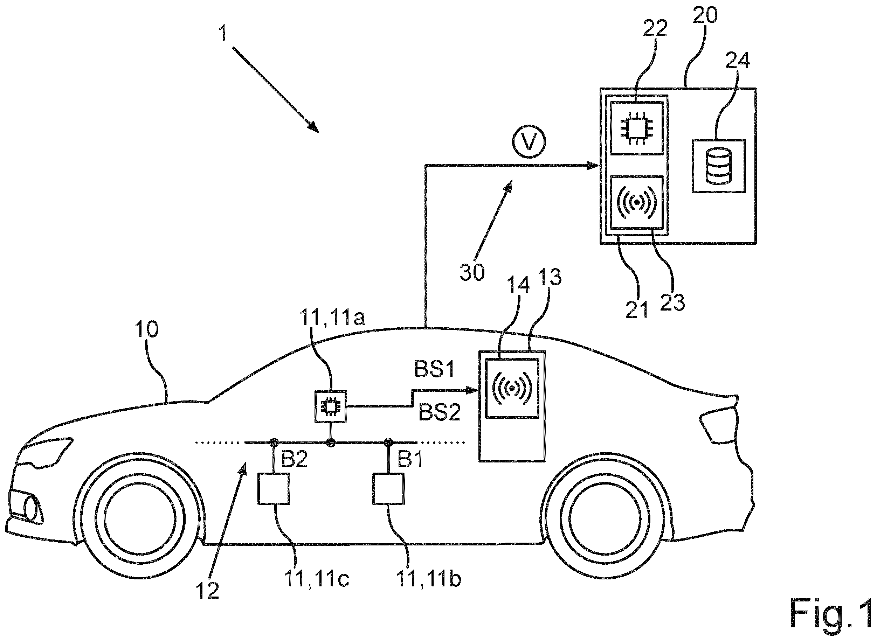

Fig. 1 zeigt in schematischer Darstellung ein System 1. Das System 1 umfasst ein Kraftfahrzeug 10 als Sendegerät und einen fahrzeugexternen Backendserver 20 als Empfangsgerät.

Das Kraftfahrzeug 10 umfasst mehrere Funktionseinheiten 11, die vorliegend Steuereinheiten des Kraftfahrzeugs 10 zum Ausführen einer vorbestimmten Fahrzeugfunktion ausbilden. Eine Funktionseinheit 11 kann zum Beispiel eine zentrale Recheneinheit 11a des Kraftfahrzeugs, also zum Beispiel eine CPU oder ein zentraler Bordcomputer, sein. Die übrigen beiden Funktionseinheiten 11 können zum Beispiel eine Türsteuereinheit 11b und eine Antriebssteuereinheit 11c sein. Die Funktionseinheiten 11 sind in einem elektrischen Netzwerk oder Bordnetz mittels eines BUS-Systems 12 miteinander verbunden. Vorliegend kann es sich zum Beispiel um ein BUS-System des Typs CAN-BUS handeln. Das BUS-System 12 gibt sowohl die Topologie der Verbindung zwischen den Funktionseinheiten 11, als auch eine Kommunikation gemäß einem vorbestimmten Kommunikationsprotokoll für die Datenübertragung zwischen den Funktionseinheiten vor.

Vorliegend kann das BUS-System 12 zum Beispiel eine an sich bekannte Master-Slave-Konfiguration der Funktionseinheiten 11 vorgeben. Dabei kann die zentrale Recheneinheit 11a zum Beispiel ein Master-Steuergerät umfassen, während die übrigen beiden Funktionseinheiten 11 sogenannte Slave-Steuergeräte umfassen. Die zentrale Recheneinheit 11a steuert somit den Zugriff auf den gemeinsamen Übertragungsweg, hier die jeweilige Datenleitung zur Anbindung der Türsteuereinheit 11b und der Antriebssteuereinheit 11c an die zentrale Recheneinheit 11a.

Die Kommunikation zwischen den Funktionseinheiten 11 kann zum Beispiel das Übertragen von Botschaften umfassen. Die Botschaften können zum Beispiel einen Zustand oder einen Status der jeweiligen Funktionseinheit 11 angeben. Zum Beispiel kann die Antriebssteuereinheit 11c als Botschaft eine Ist-Drehzahl eines Motors an die zentrale Recheneinheit 11a bereitstellen. Die Türsteuereinheit 11b kann als Botschaft zum Beispiel einen Zustand der Fahrzeugtür, wie zum Beispiel "Tür auf" oder "Tür zu", übertragen. Die jeweiligen Botschaften der Funktionseinheiten 11 werden dabei in Form von periodischen Botschaftssignalen B1, B2 übertragen. Das heißt, die jeweiligen Botschaften werden in dem zugeordneten Botschaftssignal B1, B2 getaktet oder periodisch, also in vorbestimmten Zeitzyklen nacheinander, gesendet. Vorliegend ist das Botschaftssignal B1 zum Beispiel der Türsteuereinheit 11b zugeordnet. Das Botschaftssignal B2 ist zum Beispiel der Antriebssteuereinheit 11c zugeordnet. Eine Zykluszeit oder Periodizität, in der Botschaften mittels des ersten Botschaftssignals B1 übertragen werden, kann zum Beispiel 1.000 Millisekunden betragen. Im Gegensatz dazu kann die Periodizität zwischen Botschaften, die in dem Botschaftssignal B2 übertragen werden, 20 Millisekunden betragen.

Die zentrale Recheneinheit 11a kann die Botschaftssignale B1, B2 erfassen und zum Beispiel weiterverarbeiten, also zum Beispiel auswerten. Das Ergebnis der Auswertung kann die zentrale Recheneinheit 11a zum Beispiel nutzen, um die Steuereinheiten 11b, 11c anzusteuern. Beispielweise kann die zentrale Recheneinheit 11a eine Soll-Drehzahl für den Motor an die Antriebssteuereinheit 11c vorgeben.

Um die Datenverarbeitung zu optimieren, können die Botschaftssignale B1, B2 beziehungsweise die jeweiligen Botschaften alternativ oder zusätzlich fahrzeugextern zum Beispiel mittels des Backendservers 20 weiterverarbeitet werden. Dieser kann die Botschaftssignale zum Beispiel auswerten und ausgewertet an das Kraftfahrzeug 10 für die Steuerung zurückschicken oder diese zum Beispiel zum späteren Abrufen zwischenspeichern.

Für die externe Verarbeitung kann die zentrale Recheneinheit 11a zum Beispiel auch eine oder mehrere Botschaften des jeweiligen Botschaftssignals B1, B2 in einem Botschafts-Datensatz BS1 und BS2 zusammenfassen und so zur Verarbeitung durch den Backendserver 20 vorbereiten. Vorliegend kann der Botschafts-Datensatz BS1 zum Beispiel nur Botschaften des Botschaftssignals B1 umfassen, während der Botschafts-Datensatz BS2 nur Botschaften des Botschaftssignals B2 umfasst. Die Anzahl der Botschaften, die in einem Botschafts-Datensatz BS1, BS2 zusammengefasst oder von diesem umfasst sind, kann zum Beispiel durch eine vorbestimmte Paketgröße vorgegeben sein.

Die zentrale Recheneinheit 11a kann die Botschaftsdatensätze BS1, BS2 zum Aussenden an den Backendserver 20 an eine Datensammeleinheit 13 des Kraftfahrzeugs 10 übertragen. Die Datensammeleinheit 13 kann als sogenannter Online Data Collector bezeichnet werden. Die Datensammeleinheit 13 kann eine eigenständige Steuereinheit zu den übrigen Funktionseinheiten 11 des Kraftfahrzeugs 10 ausbilden. Alternativ kann die Datensammeleinheit 13 zum Beispiel als Modul von der zentralen Recheneinheit 11a umfasst sein.

Die Datensammeleinheit 13 kann den jeweiligen Botschafts-Datensatz BS1, BS2 erfassen und in einem Verarbeitungssignal V zur Verarbeitung an den Backendserver 20 übertragen. Dazu können das Kraftfahrzeug 10 und der Backendserver 20 zum Beispiel in einer drahtlosen oder kabellosen Kommunikationsverbindung 30 miteinander verbunden sein. Es kann sich zum Beispiel um eine Mobilfunkverbindung handeln. Für die drahtlose Datenübertragung umfasst die Datensammeleinheit 13 eine Kommunikationseinheit 14, die vorliegend zum Beispiel als Mobilfunkmodul ausgebildet ist. Eine korrespondierende Kommunikationseinheit 23, also zum Beispiel ein korrespondierendes Mobilfunkmodul, ist von einer Datenverarbeitungsvorrichtung 21 des Backendservers 20 umfasst. Die Kommunikationseinheiten 14, 23 können eine Kommunikationsschnittstelle für das Kraftfahrzeug 10 und den Backendserver 20 ausbilden.

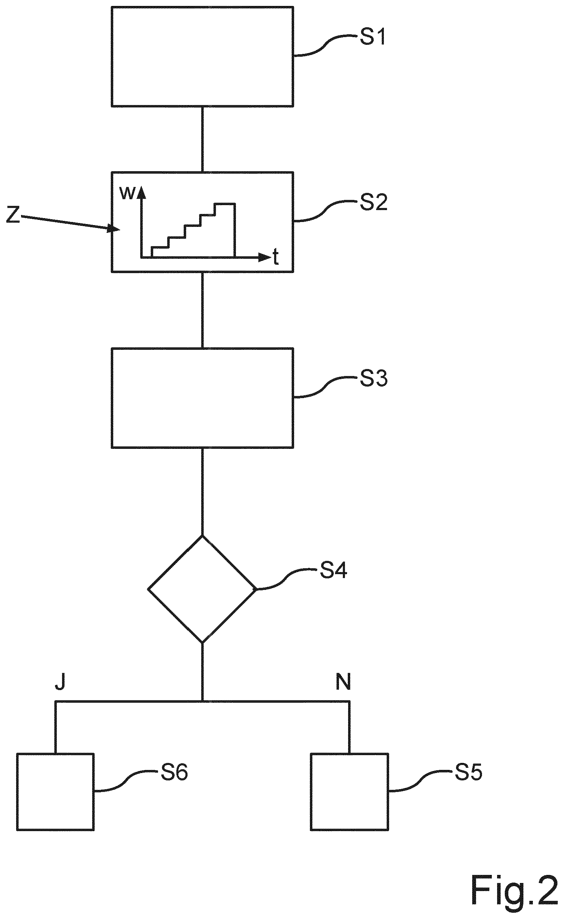

Die Datenverarbeitungsvorrichtung 21 ist zur Verarbeitung des Verarbeitungssignals V beziehungsweise der darin enthaltenen Botschaften einsetzbar. Die Verarbeitung kann beispielsweise ein Auswerten und/oder Speichern umfassen. Zum Speichern kann der Backendserver 20 zum Beispiel, wie in Fig. 1 gezeigt, eine Speichereinrichtung, also einen Datenspeicher 24, umfassen. Zum Auswerten kann die Datenverarbeitungsvorrichtung 21 zum Beispiel eine Recheneinheit 22, wie zum Beispiel einen Mikrocontroller, umfassen. Neben der Funktion der Verarbeitung kann die Datenverarbeitungsvorrichtung 21 auch eine Funktion des Überprüfens der Güte oder Qualität der Datenübertragung in dem System 1 bereitstellen. Somit können Fehler in der Datenübertragung auf einer Datenstrecke im Kraftfahrzeug 10 und/oder auf einer Datenstrecke zwischen Kraftfahrzeug 10 und Backendserver 20 erkannt werden. Wie diese Funktion realisiert sein kann, wird im Folgenden anhand von Fig. 2 näher beschrieben.

Fig. 2 zeigt ein schematisches Verfahrensablaufdiagramm für ein Verfahren zum Betreiben der Datenverarbeitungsvorrichtung 21, wie sie beispielhaft zuvor beschrieben wurde. Dabei kann mittels der Datenverarbeitungsvorrichtung 21 ein Verfahren zum Erzeugen eines Indikators für das Angeben der Güte der kabellosen Datenübertragung zwischen dem Kraftfahrzeug 10 und dem Backendserver 20 ausgeführt werden.

In einem Schritt S1 des Verfahrens wird mittels der Datenverarbeitungsvorrichtung 21 zunächst das Verarbeitungssignal V erfasst. Mittels der Recheneinheit 22 kann das Verarbeitungssignal V ausgewertet und beispielsweise die jeweiligen Botschaftsdatensätze BS1, BS2 isoliert oder bestimmt werden. Anschließend kann das Verfahren in einem Schritt S2 fortgeführt werden.

In dem Schritt S2 wird ein aktueller Empfangsgeräte-Botschaftszählwert in Abhängigkeit von einer Anzahl der an den Backendserver 20 übertragenen Botschaften des jeweiligen Botschafts-Datensatzes BS1, BS2 bestimmt. Das heißt, die Recheneinheit 22 kann zum Beispiel auslesen oder berechnen, wie viele Botschaften in dem jeweiligen Botschafts-Datensatz BS1, BS2 vorhanden sind. Dabei kann neben den aktuell übertragenen Botschafts-Datensätzen BS1, BS2 auch (zeitlich) vorhergegangen übertragenen Botschafts-Datensätzen BS1, BS2 berücksichtigt werden. So kann ermittelt werden, wie viele Botschaften tatsächlich bereits über die Kommunikationsverbindung 30 übertragen wurden, und zwar insbesondere innerhalb eines vorbestimmten Datenübertragungsintervalls des Systems 1. Das Datenübertragungsintervall kann zum Beispiel ein Zeitintervall zwischen einem Startzeitpunkt (Aktivierung oder Neustart) des Kraftfahrzeugs 10 und dem aktuellen Zeitpunkt sein. Das kann somit einen Betriebszeitraum des Kraftfahrzeugs 10 angeben. Anschließend wird das Verfahren in einem Schritt S3 fortgesetzt.

In dem Schritt S3 wird zum Beispiel mittels der Recheneinheit 22 ein Vergleichs-Botschaftszählwert bestimmt. Der Vergleichs-Botschaftszählwert ergibt sich dabei in Abhängigkeit der vorbekannten Periodizität von jeweils aufeinanderfolgenden Botschaften, die von der zugeordneten Funktionseinheit 11 mittels des jeweiligen Botschaftssignals B1, B2 im Sendegerät periodisch bereitgestellt werden. Der Vergleichs-Botschaftszählwert kann somit angeben, wie viele Botschaften in dem jeweiligen übertragenen Botschafts-Datensatz BS1, BS2 vorhanden sein sollten und deshalb innerhalb des Datenübertragungsintervalls an den Backendserver 20 hätten übertragen werden sollen.

Zum Bestimmen des Vergleichs-Botschaftszählwerts kann die Datenverarbeitungsvorrichtung 21 von dem Kraftfahrzeug 10 zum Beispiel den Startzeitpunkt des Datenübertragungsintervalls und die Paketgröße des jeweiligen Botschafts-Datensatzes BS1, BS2 erfassen. Diese können zum Beispiel von dem Kraftfahrzeug 10 in dem Verarbeitungssignal V bereitgestellt werden. Das kann einmalig zum Beispiel initial beim Übertragen des ersten Verarbeitungssignals V in dem Datenübertragungsintervalls erfolgen. Alternativ können diese Informationen bei jeder Übertragung mitgesendet werden. Dadurch kann der Backendserver 20 für jedes Botschaftssignal B1, B2 im Kraftfahrzeug 10 die Zykluszeit oder Periodizität bestimmen. Somit kann der Backendserver 20 selbst mitzählen, wie viele Botschaften in dem jeweils übermittelten Botschafts-Datensatz BS1, BS2 enthalten sein sollten. Der Backendserver 20 kann somit einen Botschaftszähler ausbilden.

Für die Botschaftszählwerte kann vorliegend ein vorbestimmtes Zählschema vorgegeben sein. Zum Beispiel kann für die Botschaftszählwerte ein Wertebereich von 0 bis 15 vorgegeben sein. Sobald der Maximalwert 15 erreicht ist, wird der Zählvorgang erneut von 0 begonnen. In Fig. 2 zu Schritt S2 ist beispielhaft ein Zählsignal Z für einen entsprechenden Botschaftszähler dargestellt. Auf der Abszisse (x-Achse) ist dabei die Zeit dargestellt, während die Ordinate (y-Achse) den jeweiligen Botschaftszählwert darstellt. Wie in Fig. 2 gezeigt, kann das Zählsignal Z als Stufensignal zwischen einem Minimalwert zum Beispiel 0 und dem Maximalwert zum Beispiel 15 ausgebildet sein, wobei jeder Stufe einer neuen Botschaft entspricht, und der Zählwert W mit jeder Botschaft um genau den Wert 1 erhöht wird. Wie in Fig. 2 gezeigt, sind sie Stufen des Zählsignals symmetrisch, was veranschaulicht, dass die Botschaften bei einer intakten Botschaftsübertragung in regelmäßigen Zeitintervallen erfasst werden.

Die jeweiligen Botschaftszählwerte können zum Beispiel als Mittelwert oder als Summe der für eine bestimmte Anzahl von Botschaften vorgesehenen Datengröße gebildet werden. Zum Beispiel können der Mittelwert oder die Summe über ein Fenster von 16 aufeinanderfolgenden Botschaften gebildet werden. Aufgrund der periodischen Abfolge des Botschaftszählers, also der Botschaften, ist es dabei egal, wo oder wann man startet, solange man über die jeweilige Periode, also die vorbestimmte Anzahl der Botschaften, summiert, beziehungsweise den Mittelwert bildet. Bei den Werten von 0 bis 15 für den Botschaftszähler muss die Summe insgesamt 120 ergeben beziehungsweise der Mittelwert 7,5 sein, sofern keine Botschaften bei der Erfassung oder Verarbeitung verloren gegangen sind.

Anschließend wird das Verfahren in einem Schritt S4 fortgesetzt.

In dem Schritt S4 wird überprüft, ob der Empfangsgeräte-Botschaftszählwert mit dem Vergleichs-Botschaftszählwert gemäß einem vorgegebenen Überprüfungskriterium übereinstimmt. Zum Beispiel kann gemäß dem Überprüfungskriterium überprüft werden, ob die Botschaftszählwerte einen n % großen Unterschied oder n % große Sprünge zueinander aufweisen (n = Anzahl der Botschaften). Alternativ kann das Übereinstimmungskriterium zum Beispiel die Bedingung umfassen, dass die Botschaftszählwerte exakt übereinstimmen, also den gleichen Wert aufweisen sollen.

Das Überprüfungskriterium ist somit zum Beispiel eine Vorschrift oder Bedingung, durch die vorgegeben ist, ob die verglichenen Botschaftszählwerte als übereinstimmend oder nicht übereinstimmend eingestuft werden. Zum Beispiel kann das Überprüfungskriterium einen Grenzwert für eine maximale Differenz oder eine maximale prozentuale Abweichung der beiden Botschaftszählwerte vorgeben. Vorzugsweise kann das Überprüfungskriterium zum Beispiel nur dann die Übereinstimmung anzeigen, wenn die Botschaftszählwerte exakt den gleichen Wert aufweisen. Ansonsten werden die Botschaftszählwerte als nicht-übereinstimmend klassifiziert.

Falls die Überprüfung negativ ist, also das Übereinstimmungskriterium nicht erfüllt ist (N), ist das ein Indikator für ein instabiles Verhalten oder Verarbeiten der Informationen. Damit kann die Qualität oder die Güte der Datenverarbeitung oder Datenübertragung in dem System 1 nicht gewährleistet sein. Ist dies der Fall, wird das Verfahren in einem Schritt S5 fortgesetzt.

In dem Schritt S5 wird dann ein negativer Indikator erzeugt, bezüglich der Datenübertragungsgüte angibt, dass die Datenübertragung fehlerbehaftet ist. Daraufhin kann zum Beispiel eine Fehlermeldung oder Warnmeldung von dem Backendserver 20 an das Kraftfahrzeug über die Kommunikationsverbindung 30 bereitgestellt werden. Zusätzlich oder alternativ können die der fehlerhaften Datenübertragung zugehörigen Daten vom Backendserver 20 gelöscht werden.

Ist die Überprüfung hingegen positiv, ist das Überprüfungskriterium also erfüllt (J), wird das Verfahren in einem Schritt S6 fortgesetzt. In dem Schritt S6 wird ein positiver Indikator erzeugt. Dieser gibt an, dass die Datenübertragung fehlerfrei oder korrekt erfolgt ist. Die übertragenen Daten können somit problemlos für die Weiterverarbeitung durch den Backendserver 20 verwendet werden.

Wenn der positive Indikator erzeugt wurde, kann davon ausgegangen werden, dass auch alle voraggregierten oder bisher gesammelte Daten aus dem Kraftfahrzeug 10 verwendbar sind, selbst wenn einzelne Daten oder Botschaften auf der Übertragungsstrecke verloren gegangen sind. Zudem kann davon ausgegangen werden, dass zum Beispiel auch alle anderen Nutzsignale, die in dem betrachteten Fenster, also dem Botschafts-Datensatz, mit dem Verarbeitungssignal V übertragen wurden, fehlerfrei sind. Bei den Nutzsignalen kann es sich zum Beispiel um zusätzliche Informationen oder Metainformationen zu den Botschaften handeln, die gemeinsam mit dem Verarbeitungssignal oder als Teil des Verarbeitungssignals übertragen wurden.

Alternativ zu den in den Fig. beschriebenen Ausführungsbeispielen, kann zum Beispiel das Kraftfahrzeug die Datenverarbeitungsvorrichtung 21 umfassen. Dann kann der Vergleichs-Botschaftszählwert insbesondere von dem Kraftfahrzeug 10 als Teil des Verarbeitungssignals V an den Backendserver 20 übermittelt.

Insgesamt zeigen die Ausführungsbeispiele, eine Methode zur Erzeugung eines Indikators für die Datenqualität und Datenintegrität eines Online-Datensammlers unter Ausnutzung periodischer Signale im Fahrzeug.

## Patentansprüche

1. Verfahren zum Erzeugen eines Indikators für das Angeben einer Güte einer kabellosen Datenübertragung zwischen einem Sendegerät, welches als Kraftfahrzeug ausgebildet ist, und einem damit gekoppelten Empfangsgerät, welches als Backendserver ausgebildet ist, folgende Schritte umfassend:
- Erfassen eines Verarbeitungssignals (V), welches zur Verarbeitung von dem Sendegerät an das Empfangsgerät übertragbar ist, wobei das Verarbeitungssignal (V) mittels einer Datensammeleinheit (13) des Sendegeräts bereitstellbar ist, wobei die Datensammeleinheit (13) zum Bereitstellen des Verarbeitungssignals (V) einen jeweiligen Botschafts-Datensatz (BS1, BS2) zumindest einer Funktionseinheit (11) des Sendegeräts erfassen kann, wobei der jeweilige Botschafts-Datensatz (BS1, BS2) zumindest zwei periodisch aufeinanderfolgende Botschaften umfasst, die einen Zustand der jeweiligen Funktionseinheit angeben, wobei die zumindest zwei Botschaften der zumindest einen Funktionseinheit (11) mittels BUS-Kommunikation mit einer jeweils vorbekannten Periodizität bereitgestellt werden,
- Bestimmen eines aktuellen Empfangsgeräte-Botschaftszählwerts in Abhängigkeit von einer Anzahl der an das Empfangsgerät übertragenen Botschaften des jeweiligen Botschafts-Datensatzes (BS1, BS2),
- Überprüfen, ob der Empfangsgeräte-Botschaftszählwerts mit einem vorgegebenen Vergleichs-Botschaftszählwert gemäß einem vorgegebenen Überprüfungskriterium übereinstimmt, wobei sich der Vergleichs-Botschaftszählwert in Abhängigkeit von der vorbekannten Periodizität von jeweils aufeinanderfolgenden Botschaften ergibt, die von der zugeordneten Funktionseinheit (11) im Sendegerät periodisch bereitgestellt werden, und
- in Abhängigkeit von dem Ergebnis der Überprüfung: Bereitstellen des Indikators, der die Güte der Datenübertragung des Verarbeitungssignals (V) angibt.

2. Verfahren nach Anspruch 1, wobei mittels des Sendegeräts der Vergleichs-Botschaftszählwert bestimmt wird und der Vergleichs-Botschaftszählwert von dem Verarbeitungssignal (V) zum Übertragen an das Empfangsgerät umfasst ist.

3. Verfahren nach Anspruch 1, wobei mittels des Empfangsgeräts der Vergleichs-Botschaftszählwert bestimmt wird, und zwar zusätzlich in Abhängigkeit von einem vorbekannten Startzeitpunkt eines Beginns einer Botschaftsübertragung durch die zugeordnete Funktionseinheit (11) im Sendegerät und einer vorbekannten Paketgröße, die die Anzahl der übermittelten Botschaften in dem Verarbeitungssignal (V) angibt.

4. Verfahren nach einem der vorhergehenden Ansprüche, wobei der jeweilige Botschaftszählwert (W) als eine Summe aus einer vorbestimmten Anzahl an Botschaften gebildet wird.

5. Verfahren nach einem der vorhergehenden Ansprüche, wobei der jeweilige Botschaftszählwert (W) als ein Mittelwert einer Summe aus einer vorbestimmten Anzahl an Botschaften gebildet wird.

6. Datenverarbeitungsvorrichtung (21) zum Erzeugen eines Indikators für das Angeben einer Güte einer Datenübertragung zwischen einem Sendegerät und einem zugeordneten Empfangsgerät, wobei die Datenverarbeitungsvorrichtung (21) ausgebildet ist, ein Verfahren nach einem der vorhergehenden Ansprüche durchzuführen.

7. Empfangsgerät mit einer Datenverarbeitungsvorrichtung (21) nach Anspruch 6, wobei die Datenverarbeitungsvorrichtung (21) ausgebildet ist, das Verarbeitungssignal (V) mittels kabelloser Datenübertragung von dem Sendegerät zu empfangen.

8. Sendegeräte mit zumindest einer Funktionseinheit (11) und einer Datenverarbeitungsvorrichtung (21) nach Anspruch 6, wobei die Datenverarbeitungsvorrichtung (21) eine Datensammeleinheit (13) zum Bereitstellen des Verarbeitungssignals (V) umfasst, welche ausgebildet ist, zum Bereitstellen des Verarbeitungssignals (V) einen jeweiligen Botschafts-Datensatz (BS1, BS2) der jeweiligen Funktionseinheit (11) zu erfassen, und das Sendegerät ausgebildet ist, das Verarbeitungssignal (V) mittels kabelloser Datenübertragung an das Empfangsgerät zu übertragen.

9. System (1) mit einem Sendegerät und einem Empfangsgerät, welche in einer kabellosen Kommunikationsverbindung (30) zur Datenübertragung miteinander gekoppelt sind, wobei das Empfangsgerät nach Anspruch 7 ausgebildet ist und/oder das Sendegerät nach Anspruch 8 ausgebildet ist.

## Claims

1. Process for generating an indicator for providing a quality of a wireless data transmission between a transmitting device, which is designed as a motor vehicle, and a receiving device coupled therewith, which is designed as a back-end server, comprising the following steps:
- capturing a processing signal (V), which is transmittable from the transmitting device to the receiving device for processing, wherein the processing signal (V) is suppliable by means of a data collection unit (13) of the transmitting device, wherein the data collection unit (13) can capture a respective message data set (BS1, BS2) from at least one functional unit (11) of the transmitting device, in order to provide the processing signal (V), wherein the respective message data set (BS1, BS2) comprises at least two periodically consecutive messages, which indicate the state of the respective functional unit, wherein the at least two messages of the at least one functional unit (11) are provided by means of bus communication with a previously known periodicity,
- determining a current message count value for a receiving device, based on a count of the messages of the respective message data set (BS1, BS2) transmitted to the receiving device,
- checking whether the receiving device message count value matches with a specified comparison message count value according to a specified verification criterion, wherein the comparison message count value is determined based on the previously known periodicity of each successive message, which are periodically provided by the assigned functional unit (11) in the transmitting device, and
- based on the result of the checking: preparing of the indicator, which indicates the quality of the data transmission of the processing signal (V).

2. Process according to claim 1, wherein the comparison message count value is determined by means of the transmitting device and the comparison message count value is included in the processing signal (V) for transmission to the receiving device.

3. Process according to claim 1, wherein the comparison message count value is determined by means of the receiving device, and additionally, based on a previously known start time for the beginning of a message transmission by the assigned functional unit (11) in the transmitting device and a previously known packet size, which indicates the count of the transmitted messages in the processing signal (V).

4. Process according to one of the preceding claims, wherein the respective message count value (W) is formed as a sum of a predetermined count of messages.

5. Process according to one of the preceding claims, wherein the respective message count value (W) is formed as an average of a sum of a predetermined count of messages.

6. Data processing device (21) for the generation of an indicator for providing the quality of a data transmission between a transmitting device and an assigned receiving device, wherein the data processing device (21) is designed to carry out a process according to one of the preceding claims.

7. Receiving device with a data processing device (21) according to claim 6, wherein the data processing device (21) is designed to receive the processing signal (V) by means of a wireless data transmission from the transmitting device.

8. Transmitting device with at least one functional unit (11) and one data processing device (21) according to claim 6, wherein the data processing device (21) comprises a data collection unit (13) for preparing the processing signal (V), which is designed for capturing a respective message data set (BS1, BS2) from the respective functional unit (11) for preparing the processing signal, and the transmitting device is designed for transmitting the processing signal (V) by means of a wireless data transmission to the receiving device.

9. System (1) with a sending device and a receiving device, which are coupled to each other in a wireless communications link (30) for data transmission, wherein the receiving device is designed according to claim 7 and/or the transmitting device is designed according to claim 8.

## Revendications

1. Procédé pour générer un indicateur destiné à indiquer la qualité d'une transmission de données sans fil entre un dispositif émetteur, conçu comme un véhicule automobile, et un dispositif récepteur qui lui est couplé, conçu comme un serveur backend, comprenant les étapes suivantes :
- l'acquisition d'un signal de traitement (V), qui peut être transmis du dispositif émetteur au dispositif récepteur à des fins de traitement, dans lequel le signal de traitement (V) peut être fourni au moyen d'une unité de collecte de données (13) du dispositif émetteur, l'unité de collecte de données (13) étant configurée pour acquérir, afin de fournir le signal de traitement (V), un ensemble de données de messages (BS1, BS2) d'au moins une unité fonctionnelle (11) du dispositif émetteur, l'ensemble de données de messages (BS1, BS2) respectif comprenant au moins deux messages se succédant périodiquement et indiquant un état de l'unité fonctionnelle respective, les au moins deux messages de l'au moins une unité fonctionnelle (11) étant fournis au moyen d'une communication par bus avec une périodicité connue à l'avance,
- la détermination d'une valeur numérique de messages actuelle du dispositif récepteur en fonction d'un nombre de messages de l'ensemble de données de messages (BS1, BS2) respectif transmis au dispositif récepteur,
- la vérification visant à déterminer si la valeur numérique de messages du dispositif récepteur correspond à une valeur numérique de messages de comparaison prédéfinie selon un critère de vérification prédéfini, la valeur numérique de messages de comparaison étant déterminée en fonction de la périodicité connue à l'avance de messages successifs respectifs fournis périodiquement par l'unité fonctionnelle (11) associée dans le dispositif émetteur, et
- en fonction du résultat de la vérification : fourniture de l'indicateur indiquant la qualité de la transmission des données du signal de traitement (V).

2. Procédé selon la revendication 1, dans lequel la valeur numérique de messages de comparaison est déterminée au moyen du dispositif émetteur et est incluse dans le signal de traitement (V) pour être transmise au dispositif récepteur.

3. Procédé selon la revendication 1, dans lequel la valeur numérique de messages de comparaison est déterminée au moyen du dispositif récepteur, en outre en fonction d'un instant de départ connu à l'avance correspondant au début d'une transmission de messages par l'unité fonctionnelle (11) associée dans le dispositif émetteur, et d'une taille de paquets connue à l'avance indiquant le nombre de messages transmis dans le signal de traitement (V).

4. Procédé selon l'une des revendications précédentes, dans lequel la valeur numérique de messages respective (W) est formée comme une somme d'un nombre prédéterminé de messages.

5. Procédé selon l'une des revendications précédentes, dans lequel la valeur numérique de messages respective (W) est formée comme une valeur moyenne issue d'une somme d'un nombre prédéterminé de messages.

6. Dispositif de traitement de données (21) pour générer un indicateur permettant d'indiquer la qualité d'une transmission de données entre un dispositif émetteur et un dispositif récepteur associé, le dispositif de traitement de données (21) étant configuré pour exécuter un procédé selon l'une des revendications précédentes.

7. Dispositif récepteur comprenant un dispositif de traitement de données (21) selon la revendication 6, le dispositif de traitement de données (21) étant configuré pour recevoir le signal de traitement (V) du dispositif émetteur au moyen d'une transmission de données sans fil.

8. Dispositif émetteur comprenant au moins une unité fonctionnelle (11) et un dispositif de traitement de données (21) selon la revendication 6, le dispositif de traitement de données (21) comprenant une unité de collecte de données (13) destinée à fournir le signal de traitement (V), qui est configurée pour acquérir, afin de fournir le signal de traitement (V), un ensemble de données de messages (BS1, BS2) respectif de l'unité fonctionnelle (11) respective, le dispositif émetteur étant configuré pour transmettre le signal de traitement (V) au dispositif récepteur au moyen d'une transmission de données sans fil.

9. Système (1) comprenant un dispositif émetteur et un dispositif récepteur, qui sont couplés l'un à l'autre dans une liaison de communication sans fil (30) pour la transmission de données, le dispositif récepteur étant configuré selon la revendication 7 et/ou le dispositif émetteur étant configuré selon la revendication 8.
